(19) **Europäisches Patentamt**
European Patent Office
Office européen des brevets

(11) **EP 2 910 968 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
*G01S 7/41* (2006.01)          *G01S 13/52* (2006.01)
*G01S 13/58* (2006.01)          *G01S 13/91* (2006.01)
*G08G 1/015* (2006.01)          *G01S 13/86* (2006.01)

(21) Anmeldenummer: **14155688.6**

(22) Anmeldetag: **19.02.2014**

(54) **Vorrichtung und Verfahren zur Detektion einer Radachse eines Fahrzeugs**

Device and method for detecting a wheel axle of a vehicle

Dispositif et procédé de détection d'un essieu de roue d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.08.2015 Patentblatt 2015/35**

(73) Patentinhaber: **Kapsch TrafficCom AG**
**1120 Wien (AT)**

(72) Erfinder: **Nagy, Oliver**
**1190 Wien (AT)**

(74) Vertreter: **Weiser, Andreas**
**Patentanwalt**
**Kopfgasse 7**
**1130 Wien (AT)**

(56) Entgegenhaltungen:
**EP-A1- 0 674 184          EP-A1- 2 682 778**
**DE-U1-202009 012 684**

**Beschreibung**

Die vorliegende Erfindung betrifft eine Vorrichtung und ein Verfahren zur Detektion einer Radachse eines auf einer Fahrbahn fahrenden Fahrzeugs.

Zur Radachsdetektion eines fahrenden Fahrzeugs werden heute in die Fahrbahn oder ihren Unterbau Induktionsschleifen eingebaut, welche eine Radachse anhand der magnetischen Leitfähigkeit insbesondere der metallischen Radfelgen beim Überfahren detektieren können. Derartige Sensoren erfordern jedoch bei Einbau, Wartung bzw. Tausch aufwändige bauliche Maßnahmen an der Fahrbahn. Überdies führen Verschmutzungen oder Fahrbahnschäden, z.B. durch Frost, in der Nähe solcher Sensoren zu Störungen oder Fehlsignalen.

Alternativ dazu werden einzelne Räder eines Fahrzeugs mittels entsprechender Auswertealgorithmen anhand ihrer Form in einer Bildaufnahme einer Fahrzeugseite oder einem z.B. gemäß der Patentanmeldung US 2002/0140924 A1 durch Laserscannen der Fahrzeugseite erzeugten 3D-Modell aufgefunden und daraus auf Radachsen geschlossen. Dabei erschwert jedoch jede etwa kreisrunde Struktur am Fahrzeug - z.B. eine Schlauchtrommel oder bei Bildaufnahmen sogar Darstellungen wie eine Werbeaufschrift - die korrekte Auswertung; auch sind Laserscanning und 3D-Modellerstellung sehr aufwändige Verfahren. Überdies sind derartige optische Verfahren anfällig gegenüber Sichtbehinderungen z.B. durch Sprühnebel oder Schneefall und Verschmutzung der Messoptik. Ferner ist aus einer Detektion eines einzelnen, einseitig montierten Rades nicht zuverlässig auf eine Fahrzeugachse zu schließen; es könnte sich auch um ein seitlich angebrachtes Ersatzrad oder eine angehobene, meist nicht zu berücksichtigende Achse des Fahrzeugs handeln.

Ferner ist bekannt, Räder eines auf einer Fahrbahn fahrenden Fahrzeugs mit Hilfe eines fahrbahnseitig oder in einem Messfahrzeug montierten Radarsensors zu detektieren, siehe das Patent EP 2 538 239 B1 bzw. die Patentanmeldung WO 2012/175470 A1 der Anmelderin. Dabei wird durch geeignete Ausrichtung des Radarsensors auf die Fahrzeugseite und Bündelung seines Messstrahls etwa auf die Höhe der Radachse im Frequenzspektrum des reflektierten Radar-Messstrahls in Folge der Drehung des Rades und der daraus resultierenden Doppler-Frequenzverschiebung des reflektierten Messstrahls ein Rad detektiert. Der Radarsensor wird dabei individuell auf das Fahrzeug und sein Rad ausgerichtet, wozu der Abstand des vorbeifahrenden Fahrzeugs gegenüber dem Radarsensor vorausbestimmt wird.

Wie in der genannten WO 2012/175470 A1 ausführlich beschrieben ist, kommt es bei einem flächigen Auftreffbereich des Messstrahls auf dem Fahrzeug bzw. Rad zu unterschiedlichen Dopplerfrequenzverschiebungen und somit einer "Aufsplittung" bzw. "Aufspreizung" der Frequenz des Messstrahls und damit zu einem Empfangsfrequenzgemisch, anhand dessen mit hoher Treffsicherheit Räder detektiert werden können.

Allerdings ist bei den angeführten optischen und radarbasierten Verfahren die richtige Positionierung der Kameras, Scanner bzw. Radarsensoren schwierig und Überdeckungen durch andere Fahrzeuge sind insbesondere bei mehrspurig befahrenen Fahrbahnen kaum zu verhindern.

Die Erfindung setzt sich zum Ziel, eine Vorrichtung und ein Verfahren zur Detektion einer Radachse eines auf einer Fahrbahn fahrenden Fahrzeugs zu schaffen, welche bei überschaubarem Messaufwand eine hohe Treffsicherheit bei der Achsdetektion sicherstellen und dabei auch auf mehrspurigen Fahrbahnen einsetzbar und witterungsunempfindlicher sind.

Dieses Ziel wird gemäß einem ersten Aspekt der Erfindung mit einer Vorrichtung zur Detektion einer Radachse eines auf einer Fahrbahn fahrenden Fahrzeugs erreicht, welche umfasst:

eine Mehrzahl von Radarsensoren, welche an einer Tragstruktur quer über die Fahrbahn verteilt angeordnete Sendeempfänger haben und jeweils mittels eines etwa senkrecht nach unten gerichteten Messstrahls ihres Sendeempfängers zu aufeinanderfolgenden Zeitpunkten jeweils einen Doppler-Geschwindigkeitsmesswert für ein den Messstrahl reflektierendes Objekt erzeugen, und

eine an Messwertausgänge der Radarsensoren angeschlossene Auswerteeinheit, welche dafür ausgebildet ist, eine Radachse zu detektieren, wenn zwei Radarsensoren innerhalb eines Toleranzzeitfensters im Wesentlichen gleich große Maxima, oder stattdessen Minima, ihrer Geschwindigkeitsmesswerte erzeugen.

Durch die Verwendung von Radarsensoren werden Störungen der Detektionsergebnisse in Folge witterungsbedingter Sichtbehinderung oder Verschmutzung deutlich reduziert. Die Überkopf-Anordnung der Radarsensoren und ihre Wirkung etwa senkrecht nach unten ermöglicht die Anwendung der Vorrichtung auf mehrspurigen Fahrbahnen, u.zw. in gleicher Weise und bei gleicher Treffsicherheit für alle Fahrspuren, ohne dass dabei eine laufende individuelle Ausrichtung der Radarsensoren oder ihrer Sendeempfänger auf einzelne Fahrzeuge oder Räder erforderlich wäre. Da eine Radachse durch Doppeldetektion, d.h. durch Detektion jeweils eines - gleich schnell drehenden - Rades an jeder Seite eines Fahrzeugs, erkannt wird, weist die erfindungsgemäße Vorrichtung eine deutlich höhere Treffsicherheit bei der Detektion von Radachsen als bisherige Detektoren auf. Angehobene Radachsen eines Fahrzeugs oder daran einseitig montierte Objekte verfälschen das Ergebnis nicht.

Durch die Doppler-Messung im Wesentlichen von oben wird nur die vertikale Tangentialkomponente der Drehung eines Rades erfasst, nicht hingegen die Geschwindigkeit des bewegten Objektes (Fahrzeugs) selbst. Diese Entkopplung der vertikalen Tangentialkomponente der Raddrehung und der Bewegung des Messobjektes führt zu wesentlich robusteren Detektionsergebnissen.

Um eine bessere Unterscheidung nebeneinanderfahrender Fahrzeuge voneinander zu erzielen, ist es vorteilhaft, wenn die Auswerteeinheit dafür ausgebildet ist, nur dann eine Radachse zu detektieren, wenn zugleich alle zwischen den genannten beiden Radarsensoren angeordneten Radarsensoren schwellwertunterschreitende Geschwindigkeitsmesswerte erzeugen. Dadurch werden zur Achsdetektion jeweils die Doppler-Geschwindigkeitsmesswerte jener Radarsensoren herangezogen, welche knapp außerhalb der jeweiligen seitlichen Erstreckung des Fahrzeugs über diesem angeordnet sind und somit das Messsignal mit der stärksten Amplitude liefern, was die Messgenauigkeit erhöht. Ein geringes "Rauschen" der Geschwindigkeitsmesswerte der zwischenliegenden Radarsensoren hat dabei keine störenden Auswirkungen.

In einer besonders bevorzugten Ausführungsform umfasst die erfindungsgemäße Vorrichtung ferner eine Mehrzahl von Laufzeitsensoren, welche an der Tragstruktur quer über die Fahrbahn verteilt angeordnete Laufzeit-Sendeempfänger haben und jeweils mittels eines etwa senkrecht nach unten gerichteten Laufzeit-Messstrahls ihres Laufzeit-Sendeempfängers zu aufeinanderfolgenden Zeitpunkten jeweils einen Laufzeit-Entfernungsmesswert für ein den Laufzeit-Messstrahl reflektierendes Objekt erzeugen, wobei die Auswerteeinheit ferner an Messwertausgänge der Laufzeitsensoren angeschlossen und dafür ausgebildet ist, nur dann eine Radachse zu detektieren, wenn zugleich alle zwischen den beiden genannten Radarsensoren angeordneten Laufzeitsensoren einen geringeren als ihrer Höhe über der leeren Fahrbahn entsprechenden Entfernungsmesswert erzeugen.

In einer dazu alternativen oder auch damit kombinierbaren Ausführungsform umfasst die erfindungsgemäße Vorrichtung eine Mehrzahl von jeweils einem Radarsensor zugeordneten Laufzeitsensoren, welche an der Tragstruktur quer über die Fahrbahn verteilt angeordnete Laufzeit-Sendeempfänger haben und jeweils mittels eines etwa senkrecht nach unten gerichteten Laufzeit-Messstrahls ihres Laufzeit-Sendeempfängers zu aufeinanderfolgenden Zeitpunkten jeweils einen Laufzeit-Entfernungsmesswert für ein den Laufzeit-Messstrahl reflektierendes Objekt erzeugen, wobei die Auswerteeinheit an Messwertausgänge der Laufzeitsensoren angeschlossen und dafür ausgebildet ist, nur dann eine Radachse zu detektieren, wenn zugleich die den beiden genannten Radarsensoren zugeordneten Laufzeitsensoren einen ihrer Höhe über der leeren Fahrbahn entsprechenden Entfernungsmesswert erzeugen.

Das zusätzliche Heranziehen der Entfernungsmesswerte steigert die Treffsicherheit bei der Radachsdetektion, da ein zwischen zwei detektierten Rädern detektierter Fahrzeugaufbau eine Fehldetektion bei zwei mit gleicher Geschwindigkeit nebeneinanderfahrenden Fahrzeugen zuverlässig verhindert und/oder sichergestellt ist, dass erzeugte Geschwindigkeitsmesswerte tatsächlich von auf der Fahrbahn aufliegenden Rädern und nicht etwa anderen Fahrzeugen oder Fahrzeugaufbauten herrühren. Auch wird die Zuordnung von detektierten Rädern zu einem Fahrzeug auch bei dessen Fahrspurwechsel erleichtert. Ferner können, wenn gewünscht, die detektierten Radachsen anhand einer durch die zugleich durchgeführte Laufzeit-Entfernungsmessung ermittelten Fahrzeughöhe einzelnen Fahrzeugen zugeordnet werden und somit auch die gesamte Achsanzahl der Fahrzeuge bestimmt und/oder z.B. auf Plausibilität geprüft werden.

Als Laufzeitsensoren können z.B. Laser- oder anderen bekannte Laufzeitsensoren eingesetzt werden. Besonders günstig ist es, wenn die Laufzeitsensoren ($R_n$) durch die Radarsensoren ($R_n$) gebildet sind. Dadurch entfallen Montage und Anschluss zusätzlicher Sensoren; auch können Laufzeit-Entfernungsmesswerte und Geschwindigkeitsmesswerte, wenn gewünscht, gleichzeitig anhand desselben Radar-/Laufzeit-Messstrahls erzeugt werden.

Der Messstrahl kann moduliert oder unmoduliert sein, wobei nur im Fall eines modulierten Messstrahls die gleichzeitige Auswertung von Laufzeit und Dopplerverschiebung möglich ist. Deshalb werden modulierte Messstrahlen bevorzugt eingesetzt, wobei alle bekannten Modulationsverfahren einsetzbar sind, wie beispielsweise amplitudenmodulierte Pulsverfahren mit Laufzeitmessung der Einzelpulse. Eine weitere Verbesserung erfährt dieses Verfahren durch Nutzung sogenannter "Chirps", wobei der Impuls selbst frequenzmoduliert ist. Eine weitere besonders geeignete Form des modulierten Verfahrens ist die Verwendung von - nicht amplitudenmodulierten - frequenzmodulierten Messstrahlen, z.B. mit kontinuierlichen (Dauerstrich-) Messstrahlen als FMCW-Verfahren (Frequency Modulation - Continuous Wave) bekannt. Hier wird mit konstanter Amplitude das Messsignal z.B. dreieckförmig (Frequency Shift Keying, FSK) oder sägezahnförmig (Stepped-Frequency Continuous Wave, SFCW) moduliert. Auch phasencodierte oder rauschmodulierte Dauerstrich-Radarsensoren sind einsetzbar.

Bevorzugt sind die Radarsensoren frequenzmodulierte Dauerstrich-Radarsensoren, die die simultane Messung von Laufzeit und Geschwindigkeit erlauben. Wenn gewünscht, können dabei ferner Zeit- und dadurch Ortsauflösung in Bezug auf das vorbeifahrende Fahrzeug z.B. je nach Verkehr angepasst werden. Besonders günstig ist es, wenn die Messstrahlen dabei dreieckförmig frequenzmoduliert sind. Durch die Dreieckform ist die Trennung eines Laufzeit-Entfernungsmesswerts von einem Doppler-Geschwindigkeitsmesswerts besonders einfach; die erzielbare Auflösung der Messwerte steigt mit der Frequenzänderungsrate.

Um die Detektionssicherheit weiter zu erhöhen, ist es günstig, die Anordnung der Sendeempfänger der Radarsensoren und den Öffnungswinkel der Messstrahlen aufeinander abzustimmen, sodass die Messstrahlen einen Öffnungswinkel

$$\alpha \geq 2 \cdot \arctan \frac{d}{e - r_{max}}$$

haben, mit:

d......... gegenseitiger Abstand benachbarter Sendeempfänger;
e ......... Höhe der Sendeempfänger über der leeren Fahrbahn;
$r_{max}$ ... Radius des größtmöglichen Rades einer zu detektierenden Achse.

Dies führt zu einer gezielten Überlappung der Messstrahlen im Messbereich unter der Tragstruktur, sodass jeweils zumindest ein Radarsensor an jeder Fahrzeugseite ein Rad erfasst, und zwar unabhängig von Fahrzeugbreite und Position des Fahrzeugs in Querrichtung der Fahrbahn. Die gegenseitige Überlappung der Messstrahlen ist durch geeignete Abstimmung der genannten Parameter aufeinander gezielt steuerbar.

Um einen geeigneten Strahlöffnungswinkel der Messsensoren bei gleichzeitig kleiner und kompakter Bauform zu erzielen, eignet sind Messfrequenzen im Bereich von 1 bis 100 GHz, besonders aber im Bereich über 50 GHz.

Die erfindungsgemäße Vorrichtung kann ferner zur Bestimmung weiterer Parameter herangezogen werden. So ist es günstig, wenn die Auswerteeinheit dafür ausgebildet ist, aus dem gegenseitigen Abstand der genannten beiden Radarsensoren die Breite des Fahrzeugs zu ermitteln. Neben der Radachsdetektion kann die so ermittelte Breite - eventuell in Kombination mit der ebenfalls ermittelten Höhe - des Fahrzeugs z.B. zur Klassifikation von Fahrzeugen genutzt werden.

Bevorzugt ist die Auswerteeinheit dafür ausgebildet, aus einer aus den Maxima oder Minima ermittelten Geschwindigkeit des Fahrzeugs, aus dem Zeitabstand der beiden Maxima oder Minima im genannten Toleranzzeitfenster und aus der ermittelten Breite des Fahrzeugs dessen Ausrichtung auf der Fahrbahn zu ermitteln. So kann aus der Schrägstellung einer detektierten Achse gegenüber der Fahrbahnlängsrichtung bzw. der Vorrichtung die Fahrzeugausrichtung ermittelt werden und dabei z.B. ein Fahrstreifenwechsel oder ein Ausweichen erkannt werden. Gerade dazu ist es besonders günstig, wenn die Auswerteeinheit dafür ausgebildet ist, aus der Position der beiden genannten Radarsensoren an der Tragstruktur die Position des Fahrzeugs in Querrichtung der Fahrbahn zu ermitteln. Die so ermittelte Position des Fahrzeugs in Querrichtung der Fahrbahn kann z.B. zur Erkennung der vom Fahrzeug gewählten Fahrspur genutzt werden.

Um die Fahrzeugbewegung auf der Fahrbahn bestimmen zu können, ist die Auswerteeinheit bevorzugt auch dafür ausgebildet, aus der ermittelten Ausrichtung, der ermittelten Position und der ermittelten Geschwindigkeit des Fahrzeugs eine Trajektorie des Fahrzeugs auf der Fahrbahn zu schätzen.

In einer vorteilhaften Ausführungsform der Erfindung umfasst die erfindungsgemäße Vorrichtung ferner eine erste Kamera, die auf einen der Vorrichtung vorgelagerten ersten Fahrbahnabschnitt gerichtet ist und der Auswerteeinheit erste Bildaufnahmen zur Verfügung stellt, und eine zweite Kamera, die auf einen der Vorrichtung nachgelagerten zweiten Fahrbahnabschnitt gerichtet ist und der Auswerteeinheit zweite Bildaufnahmen zur Verfügung stellt, wobei die Auswerteeinheit dafür ausgebildet ist, anhand der geschätzten Trajektorie eines Fahrzeugs eine erste Bildaufnahme des Fahrzeugs in Frontansicht einer zweiten Bildaufnahme desselben Fahrzeugs in Heckansicht zuzuordnen.

Die einander zugeordneten Bildaufnahmen können in beliebiger Weise weiterverarbeitet, z.B. zu Beweiszwecken gespeichert und/oder weitergegeben werden und haben dabei aufgrund ihrer Doppelansicht höhere Beweiskraft. Damit kann z.B. eine Fahrzeugidentifikation unterstützt werden, wobei aus den beiden Bildaufnahmen jeweils ein Fahrzeugkennzeichen gelesen und diese ausgewertet und dabei auf Übereinstimmung geprüft werden. Ein bei Verkehrsüberwachungsmaßnahmen häufig notwendiges Verwerfen nicht übereinstimmender Bildaufnahmen bzw. Fahrzeugkennzeichen bei der automatischen Auswertung oder manuelles Nacharbeiten kann dadurch entfallen.

In manchen Ländern (z.B. in Australien) ist hingegen ein Fahrzeug mit bloß einer einzigen Fahrzeugkennzeichentafel zu versehen, die der Fahrzeughalter an Fahrzeugfront oder -heck montieren kann. Eine Zuordnung der beiden Bildaufnahmen ein und desselben Fahrzeugs in Front- und Heckansicht ermöglicht dabei die sichere Detektion und Identifikation jedes Fahrzeugs.

In einer weiteren vorteilhaften Ausführungsform der Erfindung umfasst die Vorrichtung zumindest eine Kamera, die auf einen der Vorrichtung vor- oder nachgelagerten Fahrbahnabschnitt gerichtet ist und der Auswerteeinheit Bildaufnahmen zur Verfügung stellt, und einen Funk-Sendeempfänger, z.B. nach dem RFID-, (CEN- oder UNI-) DSRC-, ITS-G5- oder IEEE WAVE 802.11p-Standard, der zum Auslesen von Kenndaten aus einem von einem passierenden Fahrzeug mitgeführten Fahrzeuggerät auf die Fahrbahn bzw. Fahrspur gerichtet ist und der Auswerteeinheit die ausgelesenen Kenndaten zur Verfügung stellt, wobei die Auswerteeinheit dafür ausgebildet ist, anhand der geschätzten Trajektorie eines Fahrzeugs eine Bildaufnahme des Fahrzeugs den ausgelesenen Kenndaten des Fahrzeuggeräts desselben Fahrzeugs zuzuordnen.

Die Kenndaten können dabei eine eindeutige Kennung des Fahrzeuggeräts und/oder fahrzeugspezifische Daten, z.B. Fahrzeugabmessungen, Achsanzahl etc., sein. Anhand dieser Kenndaten kann das Fahrzeuggerät und damit der Fahrzeughalter identifiziert werden bzw. die Kenndaten können zum Erkennen von Delikten, z.B. einer durch den Bediener des Fahrzeuggeräts zu niedrig deklarierten Achsanzahl eines Fahrzeugs, genutzt werden, wobei die zugeordnete Bildaufnahme zu Beweiszwecken gespeichert oder weitergegeben wird.

In einem zweiten Aspekt schafft die Erfindung ein Verfahren zur Detektion einer Radachse eines auf einer Fahrbahn fahrenden Fahrzeugs mithilfe einer Mehrzahl von Radarsensoren, welche an einer Tragstruktur quer über die Fahrbahn verteilt angeordnete Sendeempfänger haben und jeweils mittels eines etwa senkrecht nach unten gerichteten Messstrahls ihres Sendeempfängers zu aufeinanderfolgenden Zeitpunkten jeweils einen Doppler-Geschwindigkeitsmesswert für ein den Messstrahl reflektierendes Objekt erzeugen, umfassend:

Detektieren einer Radachse, wenn zwei Radarsensoren innerhalb eines Toleranzzeitfensters etwa gleich große, einen ersten Schwellwert überschreitende Maxima oder Minima ihrer Geschwindigkeitsmesswerte erzeugen.

Bezüglich der Vorteile und weiterer bevorzugter Ausführungsformen des erfindungsgemäßen Verfahrens wird auf die vorangegangen Ausführungen zur Vorrichtung verwiesen.

Die Erfindung wird nachfolgend anhand von in den beigeschlossenen Zeichnungen dargestellten Ausführungsbeispielen näher erläutert. In den Zeichnungen zeigen:

die Fig. 1 und 2 auf einer Fahrbahn fahrende Fahrzeuge beim Passieren der erfindungsgemäßen Vorrichtung in schematischer Seitenansicht (Fig. 1) bzw. Rückansicht (Fig. 2);
Fig. 3 ein Blockschaltbild der Vorrichtung der Erfindung;
Fig. 4 eine schematische und teilweise Draufsicht der Vorrichtung der Erfindung in Verbindung mit beispielhaften Messwertverläufen ihrer Radarsensoren beim Passieren eines Fahrzeugs; und
Fig. 5 ein Fahrzeug beim Fahrspurwechsel während des Passierens der Vorrichtung der Erfindung in der Draufsicht in Verbindung mit beispielhaften Messwertverläufen zweier Radarsensoren und Bildaufnahmen von Kameras der Vorrichtung.

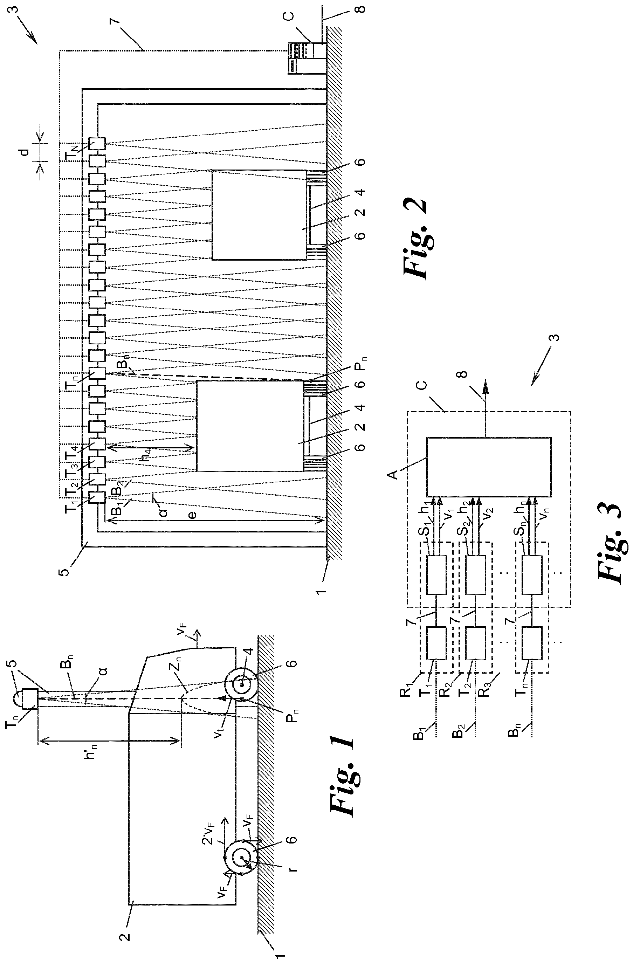

Gemäß den Fig. 1 bis 5 passieren auf einer Fahrbahn 1 fahrende Fahrzeuge 2 eine Vorrichtung 3 zur Detektion von Radachsen 4 der Fahrzeuge 2. Die Vorrichtung 3 umfasst eine Mehrzahl von Radarsensoren $R_1$, $R_2$, ..., $R_N$, allgemein $R_n$, welche an einer Tragstruktur 5 quer über die Fahrbahn 1, d.h. oberhalb der Fahrbahn 1 und von dieser beabstandet, verteilt angeordnete Radar-Sendeempfänger $T_1$, $T_2$, ..., $T_N$, allgemein $T_n$, haben. Die Sendeempfänger $T_n$ senden jeweils einen etwa senkrecht nach unten gerichteten Radar-Messstrahl $B_1$, $B_2$, ..., $B_N$, allgemein $B_n$, mit bekanntem zeitlichem Frequenz- und/oder Impulsverlauf. Jeder Messstrahl $B_n$ wird jeweils von einem Auftreffpunkt $P_1$, $P_2$, ..., $P_N$, allgemein $P_n$, auf einem Objekt - hier der Fahrbahn 1, dem Fahrzeug 2 bzw. dessen Rad 6 - reflektiert und vom jeweils sendenden Sendeempfänger $T_n$ auch wieder empfangen.

Die Radarsensoren $R_n$ bzw. ihre Sendeempfänger $T_n$ können dabei pulsförmige - zur Vermeidung gegenseitiger Störung wenn gewünscht auch pulscodierte - Messstrahlen $B_n$ abstrahlen; sie könnten alternativ auch modulierte Dauerstrich-Radarsensoren $R_n$ sein, z.B. frequenzmodulierte Dauerstrich-Radarsensoren $R_n$. Bevorzugt sind die Messstrahlen $B_n$ dreieckförmig frequenzmoduliert und haben eine Frequenzänderungsrate von mehr als 10 MHz/$\mu$s, bevorzugt mehr als 50 MHz/$\mu$s. Dabei können die Sendeempfänger $T_n$, welche an der Tragstruktur 5 benachbart oder einander nahe angeordnet sind, zur Vermeidung gegenseitiger Störung im Multiplex betrieben werden, u.zw. im Code-, Zeit- oder Frequenzmultiplex.

Wie in den Fig. 1, 2, 4 und 5 dargestellt ist, haben die Messstrahlen $B_n$ trotz einer Bündelung durch geeignete Antennengestaltung niemals einen ideal punktförmigen Querschnitt und die Auftreffpunkte $P_n$ sind somit nicht punktförmig, sondern stets zu flächigen Auftreffbereichen $Z_n$ ausgedehnt. Im Folgenden wird das Wirkungsprinzip der Radarsensoren $R_n$ zunächst anhand eines idealisierten punktförmigen Querschnitts der Messstrahlen $B_n$ erläutert, ehe anhand der Ausführungsbeispiele auf die sich in Realität ergebende Divergenz der Messstrahlen $B_n$ und die daraus resultierenden Unterschiede zum Idealfall eingegangen wird.

Weist das reflektierende Objekt 1, 2, 6 im Auftreffpunkt $P_n$ des Messstrahls $B_n$ eine Geschwindigkeitskomponente in Strahlrichtung zum Sendeempfänger $T_n$ auf, d.h. vom Sendeempfänger $T_n$ weg oder auf diesen zu, so wird der Messstrahl $B_n$ aufgrund des Dopplereffekts frequenzverschoben reflektiert, und eine Radar-Messeinheit $S_1$, $S_2$, ..., $S_N$, allgemein $S_n$, des jeweiligen Radarsensors $R_n$ erzeugt anhand der Differenz der bekannten Sende- zur gemessenen Empfangsfrequenz einen Geschwindigkeitsmesswert $v_1$, $v_2$, ..., $v_N$, allgemein $v_n$.

Ferner kann die Vorrichtung 3 eine Mehrzahl an Laufzeitsensoren $R_n$ mit Laufzeit-Messeinheiten $S_n$ und an der Tragstruktur 5 quer über die Fahrbahn 1 verteilt angeordneten Laufzeit-Sendeempfängern $T_n$ (in den Fig. 1 bis 5 nicht separat dargestellt) umfassen, wobei die Laufzeitsensoren $R_n$ jeweils mittels eines etwa senkrecht nach unten gerichteten Laufzeit-Messstrahls $B_n$ ihres Laufzeit-Sendeempfängers $T_n$ zu aufeinanderfolgenden Zeitpunkten jeweils einen Laufzeit-Entfernungsmesswert $h_1$, $h_2$, ..., $h_N$, allgemein $h_n$ für ein den Laufzeit-Messstrahl $B_n$ reflektierendes Objekt

1, 2, 6, d.h. aus der Laufzeit des Laufzeit-Messstrahls $B_n$ vom Sendeempfänger $T_n$ zum Objekt 1, 2, 6 und zurück zum Sendeempfänger $T_n$, erzeugen.

Die Laufzeitsensoren $R_n$ können dabei jeweils von den Radarsensoren $R_n$ separate Sensoren sein, z.B. Laser-Laufzeitsensoren, wobei, wenn gewünscht, jedem Radarsensor $R_n$ jeweils ein Laufzeitsensor $R_n$ und dabei jedem Radar-Sendeempfänger $T_n$ ein Laufzeit-Sendeempfänger $T_n$ in dessen unmittelbarer Nähe an der Tragstruktur 5 zugeordnet ist, oder die Laufzeitsensoren $R_n$ sind - wie bevorzugt - durch die Radarsensoren $R_n$ selbst gebildet, weshalb in den vorliegenden Ausführungen in der Folge allgemein unter "Radarsensoren $R_n$" Sensoren sowohl zur Laufzeit-Entfernungsmessung als auch zur Doppler-Geschwindigkeitsmessung verstanden werden, soweit nicht explizit anders ausgeführt wird.

Messeinheit $S_n$ und Sendeempfänger $T_n$ eines Radarsensors (und somit auch Laufzeitsensors) $R_n$ können dabei integriert und gemeinsam an der Tragstruktur 5 angeordnet sein, oder es sind, wie im Beispiel von Fig. 3 dargestellt ist, lediglich die Sendeempfänger $T_n$ an der Tragstruktur 5 angeordnet und die Messeinheiten $S_n$ sind gemeinsam mit einer Auswerteeinheit A der Vorrichtung 3 in einer z.B. straßenseitig angeordneten Recheneinheit C untergebracht und mit den Sendeempfängern $T_n$ verbunden. Die Messeinheiten $S_n$ können dabei - ebenso wie die Auswerteeinheit A - als einzelne, separate Hardware-Bausteine oder als Software-Bausteine oder als eine Mischung daraus in der Recheneinheit C implementiert sein. Die Recheneinheit C kann auch über mehrere voneinander entfernte Komponenten verteilt sein. Die Recheneinheit C und die an der Tragstruktur 5 angeordneten Radarsensoren $R_n$ - bzw. im Beispiel von Fig. 3 deren Sendeempfänger $T_n$ - sind über Datenverbindungen 7 miteinander verbunden.

Eine Radachsdetektion ist in Fig. 1 für ein mit der Geschwindigkeit $v_F$ auf der Fahrbahn 1 passierendes Fahrzeug 2 gezeigt, welches z.B. dem linken Fahrzeug 2 von Fig. 2 entspricht. Dabei hat der Messstrahl $B_n$ einen Auftreffpunkt $P_n$ auf dem Vorderrad 6 des Fahrzeugs 2. In diesem Punkt $P_n$ hat das Rad 6 eine Tangentialgeschwindigkeit $v_t$ in Bezug auf den Sendeempfänger $T_n$. Die daraus resultierende Doppler-Frequenzverschiebung des Messstrahls $B_n$, welche der genannten Tangentialgeschwindigkeit proportional ist, erlaubt es dem Radarsensor $R_n$, einen Geschwindigkeitsmesswert $v_n$ für den Auftreffpunkt $P_n$ am Rad 6 zu erzeugen. Darauf stellt der Radarsensor $R_n$ seine erzeugten Geschwindigkeitsmesswerte $v_n$ - und gegebenenfalls Entfernungsmesswerte $h_n$ - der angeschlossenen Auswerteeinheit A über seine Messwertausgänge zur Verfügung (Fig. 3).

Wie weiter oben kurz skizziert, divergieren gerade bei Radarsensoren $R_n$ die Messstrahlen $B_n$ in Realität auch bei Bündelung durch geeignete Antennen und Wahl der Messfrequenzen z.B. im Bereich von 1 bis 100GHz, insbesondere mehr als 50GHz, und haben somit beim Abstrahlen vom Sendeempfänger $T_n$ eine in den Fig. 1 und 2 als Öffnungswinkel $\alpha$ dargestellte Strahlaufweitung. Daraus resultiert eine "Aufsplittung" bzw. "Aufspreizung" sowohl in Bezug auf die Laufzeit eines Messstrahls $B_n$ als auch bezüglich der Dopplerfrequenzverschiebungen. Im Beispiel von Fig. 2 bedeutet dies, dass der Radarsensor $R_1$ mit dem Sendeempfänger $T_1$ die Montagehöhe e über der "leeren" Fahrbahn 1 als Entfernungsmesswert $h_1$ und der Radarsensor $R_4$ mit dem Sendeempfänger $T_4$ die Höhe des Dachs des Fahrzeugs 2 über der Fahrbahn 1 als Entfernungsmesswert $h_4$ trotz Strahlaufspreizung noch relativ präzise bestimmen kann; hingegen hat der Radarsensor $R_n$ mit seinem Sendeempfänger $T_n$ gemäß den Fig. 1 und 2 aufgrund des Öffnungswinkels $\alpha$ seines Messstrahls $B_n$ einen ausgedehnten Auftreffbereich $Z_n$, welcher teilweise auf der Seitenfläche des Fahrzeugs 2, teilweise auf dessen Vorderrad 6 und teilweise auf der Fahrbahn 1 liegt. Die im Radarsensor $R_n$ gemessene Laufzeit liegt in diesem Fall zwischen jener zur leeren Fahrbahn 1 und der Entfernung $h'_n$ des höchsten Punktes des Auftreffbereichs $Z_n$ auf der Seitenfläche des Fahrzeugs 2.

Die Messeinheit $S_n$ des Radarsensors $R_n$ erzeugt in der Folge als Entfernungsmesswert $h_n$ einen Mittelwert, welcher gegebenenfalls mithilfe weiterer Parameter, z.B. des Zeitverlaufs oder der Amplituden verschiedener Anteile des reflektierten Messstrahls $B_n$ etc., zusätzlich gewichtet sein kann. Alternativ dazu könnte der Radarsensor $R_n$, wenn gewünscht, auch einen der minimalen oder maximalen Laufzeit entsprechenden Entfernungsmesswert $h_n$ oder als Entfernungsmesswert $h_n$ den gesamten "aufgespreizten" Messwertbereich erzeugen, d.h. den Bereich von der minimalen bis zur maximalen in einem Zeitpunkt erfassten Entfernung.

Ähnliches gilt für die Erzeugung des Doppler-Geschwindigkeitsmesswerts $v_n$, da der Messstrahl $B_n$ je nach Öffnungswinkel $\alpha$ von einem nicht unerheblichen Bereich des Rades 6, in welchem eine ganze Bandbreite verschiedener Tangentialgeschwindigkeitskomponenten auftritt, reflektiert wird und somit die verschiedenen Dopplerfrequenzverschiebungen zu einem "Empfangsfrequenzgemisch" führen. Der Radarsensor $R_n$ bildet seinen Dopplergeschwindigkeitsmesswert $v_n$ in der Folge wieder als - eventuell gewichteten - Mittelwert, direkt aus der höchsten (bzw. niedrigsten) gemessenen Dopplerfrequenzverschiebung, gegebenenfalls unter Ausscheidung unplausibel hoher (niedriger) Frequenzverschiebungen z.B. unter zeitlicher Mittelung, oder als gesamten aufgespreizten Messwertbereich. Eine genaue Analyse der Form und des zeitlichen Verlaufs des Empfangsfrequenzgemischs infolge Frequenzaufspreizung kann der Patentanmeldung WO 2012/175470 A1 der Anmelderin entnommen werden.

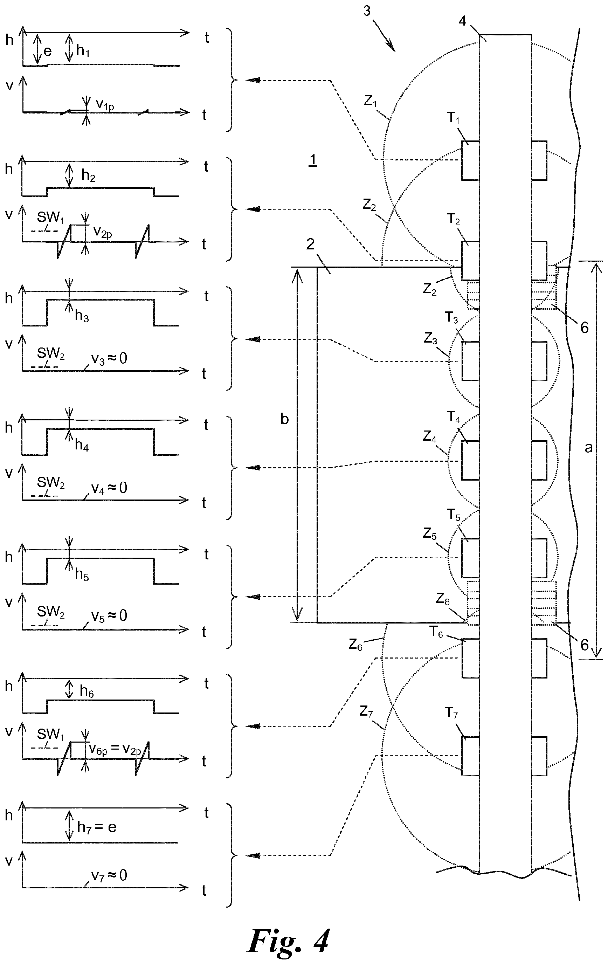

Anhand des in Fig. 4 dargestellten Beispiels für den zeitlichen Verlauf möglicher Entfernungsmesswerte $h_n$ und Geschwindigkeitsmesswerte $v_n$ mehrerer benachbarter Radarsensoren $R_n$ beim Passieren eines Fahrzeugs 2 an der Vorrichtung 3 wird im Folgenden das von der Vorrichtung 3 ausgeübte Verfahren zur Achsdetektion näher erläutert.

Der Messstrahl $B_1$ des Sendeempfängers $T_1$ hat einen Auftreffbereich $Z_1$, welcher großteils auf der leeren Fahrbahn 1 liegt. Ein kleiner Anteil des Auftreffbereichs $Z_1$ liegt jedoch auch auf dem Fahrzeug 2 bzw. seinem Rad 6. Somit liefert der Radarsensor $R_1$ in diesem Beispiel für die Dauer der Fahrzeugpassage einen von der Höhe e über der leeren Fahrbahn 1 kaum verschiedenen - gemittelten - Entfernungsmesswert $h_1$ und ebenso sehr geringe Maxima (bzw. Minima) $v_{1,p}$ des Geschwindigkeitsmesswerts $v_1$.

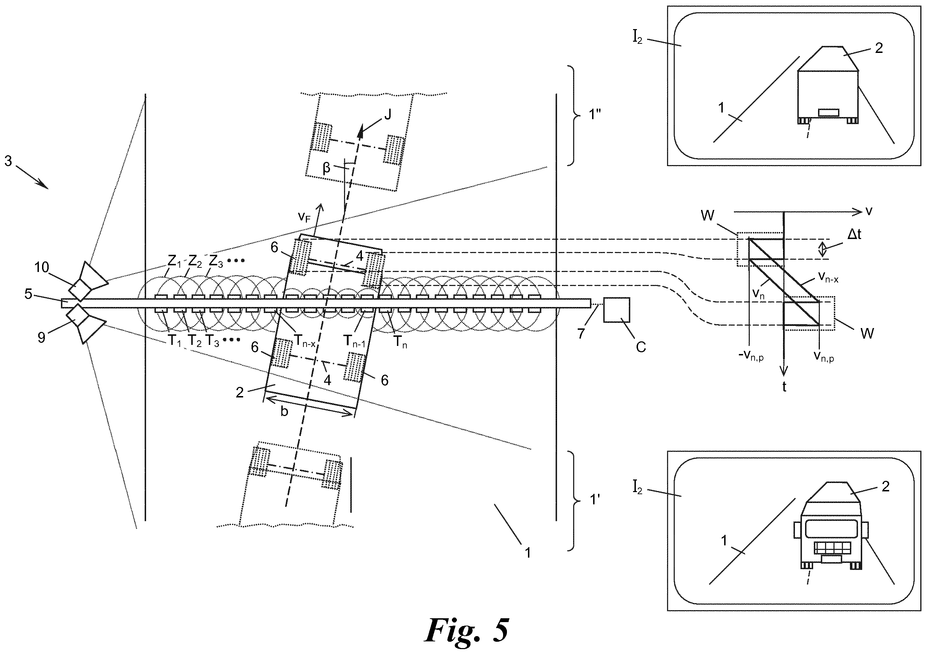

Die Messstrahlen $B_2$, $B_6$ der Sendeempfänger $T_2$, $T_6$ treffen jeweils teilweise auf die leere Fahrbahn 1 und teilweise auf das Fahrzeug 2 bzw. sein linkes/rechtes Rad 6 auf. Aufgrund dieser Auftreffbereiche $Z_2$, $Z_6$ liefern die beiden zugehörigen Radarsensoren $R_2$, $R_6$ jeweils - gemittelte - Entfernungsmesswerte $h_2$, $h_6$, die auf ein Objekt näher als die leere Fahrbahn 1 schließen lassen, sowie etwa zeitgleich - bzw. zumindest innerhalb eines Toleranzzeitfensters W (Fig. 5) - im Wesentlichen gleich große, einen ersten Schwellwert $SW_1$ übersteigende Maxima (bzw. Minima) $v_{2,p}$, $v_{6,p}$ ihrer Geschwindigkeitsmesswerte $v_2$, $v_6$, u.zw. weil sich die Räder 6 einer Radachse 4 im Wesentlichen gleich schnell drehen. Gleichzeitig liefern alle zwischen diesen beiden Radarsensoren $R_2$, $R_6$ liegenden Radarsensoren $R_3$, $R_4$, $R_5$ geringere Entfernungsmesswerte $h_3$, $h_4$, $h_5$ als jenen zur leeren Fahrbahn 1, was ein Fahrzeug 2 zwischen den beiden so detektierten Rädern 6 einer Radachse 4 anzeigt.

Die Auswerteeinheit A detektiert nun eine Radachse 4, wenn zwei Radarsensoren (hier: $R_2$, $R_6$) zeitgleich bzw. innerhalb eines Toleranzzeitfensters W im Wesentlichen gleich große Maxima (hier: $v_{2,p}$, $v_{6,p}$) bzw. Minima ihrer Geschwindigkeitsmesswerte $v_n$ erzeugen. Daraufhin übermittelt die Auswerteeinheit A eine Information betreffend die so detektierte Radachse 4 über eine Kommunikationsverbindung 8, leitungsgebunden oder über Funk, an eine entfernte Zentrale, z.B. eines Verkehrsüberwachungs- oder Mautsystems.

Im Ausführungsbeispiel von Fig. 4 werden die Maxima (bzw. Minima) $v_{1,p}$ des Geschwindigkeitsmesswerts $v_1$ des Radarsensors $R_1$ ausgeschieden und zur Radachsdetektion von der Auswerteeinheit A nicht weiter herangezogen, u.zw. aufgrund des optional zusätzlichen Detektionskriteriums, dass genau jene beiden Radarsensoren $R_2$, $R_6$ betrachtet werden, zwischen denen alle zwischenliegenden Radarsensoren $R_3$, $R_4$, $R_5$ jeweils unterhalb eines zweiten Schwellwerts $SW_2$ liegende Geschwindigkeitsmesswerte $v_3$, $v_4$, $v_5$ erzeugen. Alternativ dazu könnte die Auswerteeinheit A zu geringe Geschwindigkeitsmesswerte $v_n$ wie jenen des Radarsensors $R_1$ bereits von sich aus unberücksichtigt lassen.

Ferner ist es möglich, dass die Auswerteeinheit A eine Radachse 4 nur in dem Fall detektiert, wenn zugleich alle zwischen den beiden genannten Radarsensoren (hier: $R_2$, $R_6$) angeordneten Laufzeit- bzw. Radarsensoren (hier: $R_3$, $R_4$, $R_5$) einen geringeren als ihrer Höhe e über der Fahrbahn 1 entsprechenden Entfernungsmesswert $h_n$ erzeugen.

Alternativ oder ergänzend dazu könnte die Auswerteeinheit A auch nur unter jener Voraussetzung eine Radachse 4 detektieren, dass zugleich die beiden genannten Radarsensoren (hier: $R_2$, $R_6$) bzw. die diesen zugeordneten Laufzeitsensoren einen ihrer Höhe e über der leeren Fahrbahn 1 entsprechenden Entfernungsmesswert (hier: $h_2$, $h_6$) erzeugen. In diesem Fall ist, falls Radar- und Laufzeitsensoren $R_n$ voneinander separat ausgeführt sind, jedem Radarsensor $R_n$ und seinem Sendeempfänger $T_n$ jeweils ein Laufzeitsensor mit seinem Sendeempfänger zugeordnet, welcher in räumlicher Nähe zum Radar-Sendeempfänger $T_n$ an der Tragstruktur 5 angeordnet ist. Dadurch ist der Zusammenhang von Laufzeit-Entfernungsmessung und Doppler-Geschwindigkeitsmessung sichergestellt, welcher bei Identität von Laufzeit- und Radarsensor $R_n$ immer gewahrt ist. Ferner erzeugt jeder Laufzeitsensor $R_n$ in diesem Fall als Entfernungsmesswert $h_n$ entweder den der maximalen ermittelten Laufzeit entsprechenden Wert (gemäß dem Beispiel von Fig. 4, wo die Auftreffbereiche $Z_2$, $Z_6$ jeweils sowohl auf dem Fahrzeug 2 und seinen Rädern 6 als auch auf der leeren Fahrbahn 1 liegen, für die Radarsensoren $R_2$, $R_6$: die Höhe e über der Fahrbahn 1) oder einen Entfernungsbereich, der (hier für die Radarsensoren $R_2$, $R_6$) auch die Höhe e über der leeren Fahrbahn 1 mitumfasst, d.h. dieser (auch) entspricht.

Die Auswerteeinheit A kann, wenn gewünscht, aus dem gegenseitigen Abstand a der genannten beiden Radarsensoren $R_2$, $R_6$ bzw. ihrer Sendeempfänger $T_2$, $T_6$ zusätzlich die Breite b des Fahrzeugs 2 ermitteln. Sie könnte dabei zur Erhöhung der Genauigkeit die - hier gemittelten, alternativ auch als Bereiche erzeugten - Entfernungsmesswerte $h_2$, $h_6$ der genannten beiden Radarsensoren $R_2$, $R_6$ mitberücksichtigen und diese dabei beispielsweise ins Verhältnis zu den Entfernungsmesswerten $h_3$, $h_4$, $h_5$ der zwischenliegenden Radarsensoren $R_3$, $R_4$, $R_5$ setzen.

Ferner könnte die Auswerteeinheit A weitere Analysen lokal durchführen - z.B. mehrere aufeinanderfolgende Achsdetektionen einem Fahrzeug zuordnen - und abschließend ein Gesamtergebnis der Achsdetektion - z.B. eine Fahrzeugklassifizierung - an die Zentrale übermitteln. Dabei könnte die Auswerteeinheit auch Delikte - z.B. eine unzulässig hohe Anzahl von Fahrzeugachsen - detektieren und nur im Falle eines detektierten Delikts Analyseergebnisse an die Zentrale übermitteln.

Wie am Hinterrad 6 des Fahrzeugs 2 in Fig. 1 dargestellt, treten die maximalen Tangentialgeschwindigkeiten $v_t$ in Bezug auf einen senkrecht darüber angeordneten Sendeempfänger $T_n$, aus welchen auch die genannten Maxima (oder Minima) $v_{n,p}$ der Geschwindigkeitsmesswerte $v_n$ erzeugt werden, am in Fahrtrichtung betrachtet vordersten bzw. hintersten Punkt des Rades 6 genau auf Höhe seiner Drehachse 4 - d.h. in Höhe seines Radius' r über der Fahrbahn 1 - auf. Da jeweils pro Rad 6 ein Maximum $v_{n,p}$ und ein Minimum auftreten und diese betragsmäßig gleich groß sind, genügt es, zur Radachsdetektion nur jeweils eines der beiden alternativ in Betracht zu ziehen, wie dies der jeweiligen Formulierung "Maxima oder stattdessen Minima" zu entnehmen ist.

In den dargestellten Beispielen der Fig. 2, 4 und 5 überlappen die benachbarten Messstrahlen $B_n$ einander so weit, dass jeweils zumindest die Auftreffzone $Z_n$ eines Radarsensors $R_n$ bis auf oder über die Achshöhe (= Radius) des größtmöglichen Rades 6 einer zu detektierenden Achse 4 fällt. Dazu haben die Messstrahlen $B_n$ in den dargestellten Beispielen einen Öffnungswinkel $\alpha$ gemäß:

$$\alpha \geq 2 \cdot \arctan \frac{d}{e - r_{\max}} \qquad \text{(Gleichung 1)}$$

in Abhängigkeit von dem gegenseitigen Abstand d benachbarter Sendeempfänger $T_n$ auf der Tragstruktur 5, der Höhe e der Sendeempfänger $T_n$ über der leeren Fahrbahn 1 und dem genannten Radius $r_{\max}$ des größtmöglichen Rades 6 einer zu detektierenden Achse 4.

Der gegenseitige Abstand d benachbarter Sendeempfänger $T_n$ an der Tragstruktur 5 kann über ihre Breite konstant sein, wie in Fig. 2 dargestellt. Alternativ dazu können die gegenseitigen Abstände d auch voneinander verschieden sein, sodass z.B. in besonders interessierenden Bereichen über der Fahrbahn 1 die Sendeempfänger $T_n$ mit geringerem gegenseitigem Abstand d und z.B. in Randbereichen der Fahrbahn 1 mit größerem gegenseitigem Abstand d an der Tragstruktur 5 angeordnet sind. Dabei ist es möglich und bevorzugt, die Öffnungswinkel $\alpha$ nach Gleichung 1 anzupassen; es könnten, wenn gewünscht, aber auch bei verschiedenen gegenseitigen Abständen d alle Messstrahlen $B_n$ den gleichen Öffnungswinkel $\alpha$ haben.

Im Ausführungsbeispiel nach Fig. 5 ermittelt die Auswerteeinheit A neben der Breite b des Fahrzeugs 2 zwischen den Sendeempfängern $T_n$, $T_{n-x}$ der Radarsensoren $R_n$, $R_{n-x}$ (x = Anzahl zwischenliegender Sendeempfänger + 1) ferner die Ausrichtung $\beta$ des Fahrzeugs 2 auf der Fahrbahn 1, u.zw. aus dem Zeitabstand $\Delta t$ und den Maxima (bzw. Minima) $v_{n,p}$ bzw. $v_{n-x,p}$ der Geschwindigkeitsmesswerte $v_n$, $v_{n-x}$ der beiden Radarsensoren $R_n$, $R_{n-x}$ im genannten Toleranzzeitfenster W, aus einer ermittelten Geschwindigkeit $v_F$ des Fahrzeugs 2 und aus der ermittelten Breite b des Fahrzeugs 2.

Die Fahrzeuggeschwindigkeit $v_F$ kann dabei durch separate Sensoren (nicht dargestellt), z.B. Lichtschranken, Radarsensoren in Fahrtrichtung der Fahrbahn 1 etc., in herkömmlicher Weise erfasst und der Auswerteeinheit A zur Verfügung gestellt werden; alternativ dazu kann die Auswerteeinheit A die Fahrzeuggeschwindigkeit $v_F$ auch selbst aus den Maxima (bzw. Minima) $v_{n,p}$, $v_{n-x,p}$ der von den Radarsensoren $R_n$, $R_{n-x}$ erzeugten Geschwindigkeitsmesswerte $v_n$, $v_{n-x}$ bilden, welche im Idealfall, wie weiter oben in Bezug auf Fig. 1 erläutert, genau der Fahrzeuggeschwindigkeit $v_F$ entsprechen.

Mithilfe der Fahrzeuggeschwindigkeit $v_F$ wandelt die Auswerteeinheit A den Zeitabstand $\Delta t$ in einen örtlichen Abstand der Räder 6 an beiden Seiten des Fahrzeugs 2 beim Passieren der Vorrichtung 3 um und ermittelt daraus und aus der Fahrzeugbreite b dessen Ausrichtung $\beta$ auf der Fahrbahn 1.

Ferner ermittelt die Auswerteeinheit A im Beispiel von Fig. 5 aus der Position der beiden genannten Radarsensoren $R_n$, $R_{n-x}$ bzw. ihrer Sendeempfänger $T_n$, $T_{n-x}$ an der Tragstruktur 5 die Position des Fahrzeugs 2 in Querrichtung der Fahrbahn 1; und schätzt überdies aus der ermittelten Ausrichtung $\beta$, der ermittelten Position und der ermittelten Geschwindigkeit $v_F$ des Fahrzeugs 2 eine Trajektorie J des Fahrzeugs 2 auf der Fahrbahn 1.

Die in Fig. 5 dargestellte Vorrichtung 3 umfasst ferner eine erste Kamera 9, die auf einen der Vorrichtung 3 vorgelagert ersten Fahrbahnabschnitt 1' gerichtet ist und der Auswerteeinheit A erste Bildaufnahmen $I_1$ zur Verfügung stellt, und eine zweite Kamera 10, die auf einen der Vorrichtung 3 nachgelagerten zweiten Fahrbahnabschnitt 1" gerichtet ist und der Auswerteeinheit A zweite Bildaufnahmen $I_2$ zur Verfügung stellt. Dabei ordnet die Auswerteeinheit A gemäß diesem Ausführungsbeispiel anhand der geschätzten Trajektorie J des Fahrzeugs 2 eine erste Bildaufnahme $I_1$ des Fahrzeugs 2 in Frontansicht einer zweiten Bildaufnahme $I_2$ desselben Fahrzeugs 2 in Heckansicht zu. Die einander zugeordneten Bildaufnahmen $I_1$, $I_2$ eines Fahrzeugs 2 können dann entweder in der Vorrichtung 3 oder einem davon unabhängigen Speicher der Recheneinheit C zum späteren Auslesen zwischengespeichert oder z.B. über die Kommunikationsverbindung 8 an eine Verkehrsüberwachungszentrale zu deren Weiterbearbeitung bzw. Verwendung übertragen werden.

Zusätzlich - oder alternativ zu einer der beiden Kameras 9, 10 - kann die in Fig. 5 dargestellte Vorrichtung 3 ferner zumindest einen Funk-Sendeempfänger umfassen (nicht dargestellt), welcher - optional mithilfe einer Richtantenne - auf die Fahrbahn 1 gerichtet ist, um über eine Funkverbindung zu einem von einem passierenden Fahrzeug 2 mitgeführten Fahrzeuggerät ("onboard unit", OBU) aus einem Speicher desselben Kenndaten auszulesen. Die Auswerteeinheit A ordnet in diesem Fall wieder anhand der geschätzten Trajektorie J eines Fahrzeugs 2 zumindest eine der Bildaufnahmen $I_1$, $I_2$ des Fahrzeugs 2 - oder im Falle zweier Bildaufnahmen $I_1$, $I_2$ diese beiden einander und - den ausgelesenen Kenndaten des Fahrzeuggeräts desselben Fahrzeugs 2 zu und speichert die Bildaufnahme(n) $I_1$, $I_2$ und die dieser/diesen zugeordneten ausgelesenen Kenndaten entweder in der Vorrichtung 3 oder dem Speicher der Recheneinheit C zwischen oder überträgt sie an die Verkehrsüberwachungszentrale bzw. eine Mautzentrale. Als Kenndaten kommen einerseits eine eindeutige Kennung zur Identifikation des Fahrzeuggeräts und dadurch, wie z.B. in Mautsystemen üblich, des Fahrzeugs bzw. seines Halters, und/oder andererseits Fahrzeugdaten wie dessen Abmessungen, Gewicht, Achsanzahl etc. in Frage, welche anhand der Analyse der Auswerteeinheit A oder der Zentrale verifiziert oder zumindest plausibilisiert werden könnten; im Abweichungsfall dient/dienen dabei die zugeordnete(n) Bildaufnahme(n)

$I_1$, $I_2$ als Beweismittel.

Die Erfindung ist nicht auf die dargestellten Ausführungsformen beschränkt, sondern umfasst alle Varianten und Modifikationen, die in den Rahmen der angeschlossenen Ansprüche fallen. So könnte das genannte Toleranzzeitfenster W auch variabel und z.B. jeweils von der ermittelten Fahrzeuggeschwindigkeit $v_F$ abhängig gewählt werden.

**Patentansprüche**

1. Vorrichtung zur Detektion einer Radachse (4) eines auf einer Fahrbahn (1) fahrenden Fahrzeugs (2), umfassend:

   eine Mehrzahl von Radarsensoren ($R_n$), welche an einer Tragstruktur (5) quer über die Fahrbahn (1) verteilt angeordnete Radar-Sendeempfänger ($T_n$) haben und jeweils mittels eines etwa senkrecht nach unten gerichteten Radar-Messstrahls ($B_n$) ihres Radar-Sendeempfängers ($T_n$) zu aufeinanderfolgenden Zeitpunkten jeweils einen Doppler-Geschwindigkeitsmesswert ($v_n$) für ein den Radar-Messstrahl ($B_n$) reflektierendes Objekt (1, 2, 6) erzeugen, und
   eine an Messwertausgänge der Radarsensoren ($R_n$) angeschlossene Auswerteeinheit (A), welche dafür ausgebildet ist, eine Radachse (4) zu detektieren, wenn zwei Radarsensoren ($R_n$, $R_{n-x}$) innerhalb eines Toleranzzeitfensters (W) im Wesentlichen gleich große Maxima ($v_{n,p}$, $v_{n-x,p}$), oder stattdessen im Wesentlichen gleich große Minima, ihrer Geschwindigkeitsmesswerte ($v_n$, $v_{n-x}$) erzeugen.

2. Vorrichtung nach Anspruch 1, **dadurch gekennzeichnet, dass** die Auswerteeinheit (A) dafür ausgebildet ist, nur dann eine Radachse (4) zu detektieren, wenn zugleich alle zwischen den genannten beiden Radarsensoren ($R_n$, $R_{n-x}$) angeordneten Radarsensoren ($R_{n-1}$, ..., $R_{n-x+1}$) schwellwertunterschreitende Geschwindigkeitsmesswerte ($v_{n-1}$, ..., $v_{n-x+1}$) erzeugen.

3. Vorrichtung nach Anspruch 1 oder 2, ferner umfassend:

   eine Mehrzahl von Laufzeitsensoren ($R_n$), welche an der Tragstruktur (5) quer über die Fahrbahn (1) verteilt angeordnete Laufzeit-Sendeempfänger ($T_n$) haben und jeweils mittels eines etwa senkrecht nach unten gerichteten Laufzeit-Messstrahls ($B_n$) ihres Laufzeit-Sendeempfängers ($T_n$) zu aufeinanderfolgenden Zeitpunkten jeweils einen Laufzeit-Entfernungsmesswert ($h_n$) für ein den Laufzeit-Messstrahl ($B_n$) reflektierendes Objekt (1, 2, 6) erzeugen,
   wobei die Auswerteeinheit (A) ferner an Messwertausgänge der Laufzeitsensoren ($R_n$) angeschlossen und dafür ausgebildet ist, nur dann eine Radachse (4) zu detektieren, wenn zugleich alle zwischen den beiden genannten Radarsensoren ($R_n$, $R_{n-x}$) angeordneten Laufzeitsensoren ($R_{n-1}$, ..., $R_{n-x+1}$) einen geringeren als ihrer Höhe (e) über der leeren Fahrbahn (1) entsprechenden Entfernungsmesswert ($h_{n-1}$, ..., $h_{n-x+1}$) erzeugen.

4. Vorrichtung nach einem der Ansprüche 1 bis 3, umfassend:

   eine Mehrzahl von jeweils einem Radarsensor ($R_n$) zugeordneten Laufzeitsensoren, welche an der Tragstruktur (5) quer über die Fahrbahn (1) verteilt angeordnete Laufzeit-Sendeempfänger ($T_n$) haben und jeweils mittels eines etwa senkrecht nach unten gerichteten Laufzeit-Messstrahls ($B_n$) ihres Laufzeit-Sendeempfängers ($T_n$) zu aufeinanderfolgenden Zeitpunkten jeweils einen Laufzeit-Entfernungsmesswert ($h_n$) für ein den Laufzeit-Messstrahl ($B_n$) reflektierendes Objekt (1, 2, 6) erzeugen,
   wobei die Auswerteeinheit (A) an Messwertausgänge der Laufzeitsensoren ($R_n$) angeschlossen und dafür ausgebildet ist, nur dann eine Radachse (4) zu detektieren, wenn zugleich die den beiden genannten Radarsensoren ($R_n$, $R_{n-x}$) zugeordneten Laufzeitsensoren ($R_n$, $R_{n-x}$) einen ihrer Höhe (e) über der leeren Fahrbahn (1) entsprechenden Entfernungsmesswert ($h_n$, $h_{n-x}$) erzeugen.

5. Vorrichtung nach Anspruch 3 oder 4, **dadurch gekennzeichnet, dass** die Laufzeitsensoren ($R_n$) durch die Radarsensoren ($R_n$) gebildet sind.

6. Vorrichtung nach einem der Ansprüche 1 bis 5, **dadurch gekennzeichnet, dass** die Auswerteeinheit (A) dafür ausgebildet ist, aus dem gegenseitigen Abstand (a) der genannten beiden Radarsensoren ($R_n$, $R_{n-x}$) die Breite (b) des Fahrzeugs (2) zu ermitteln.

7. Vorrichtung nach Anspruch 6, **dadurch gekennzeichnet, dass** die Auswerteeinheit (A) dafür ausgebildet ist, aus einer aus den Maxima ($v_{n,p}$, $v_{n-x,p}$) oder Minima ermittelten Geschwindigkeit ($v_F$) des Fahrzeugs (2), aus dem Zeitabstand (Δt) der beiden Maxima ($v_{n,p}$, $v_{n-x,p}$) oder Minima im genannten Toleranzzeitfenster (W) und aus der ermittelten Breite (b) des Fahrzeugs (2) dessen Ausrichtung (β) auf der Fahrbahn (1) zu ermitteln.

8. Vorrichtung nach einem der Ansprüche 1 bis 7, **dadurch gekennzeichnet, dass** die Auswerteeinheit (A) dafür ausgebildet ist, aus der Position der beiden genannten Radarsensoren ($R_n$, $R_{n-x}$) an der Tragstruktur (5) die Position des Fahrzeugs (2) in Querrichtung der Fahrbahn (1) zu ermitteln.

9. Vorrichtung nach Anspruch 8 in Verbindung mit Anspruch 7, **dadurch gekennzeichnet, dass** die Auswerteeinheit (A) dafür ausgebildet ist, aus der ermittelten Ausrichtung (β), der ermittelten Position und der ermittelten Geschwindigkeit ($v_F$) des Fahrzeugs (2) eine Trajektorie (J) des Fahrzeugs (2) auf der Fahrbahn (1) zu schätzen.

10. Vorrichtung nach Anspruch 9, ferner umfassend

    eine erste Kamera (9), die auf einen der Vorrichtung (3) vorgelagerten ersten Fahrbahnabschnitt (1') gerichtet ist und der Auswerteeinheit (A) erste Bildaufnahmen ($I_1$) zur Verfügung stellt, und

    eine zweite Kamera (10), die auf einen der Vorrichtung (3) nachgelagerten zweiten Fahrbahnabschnitt (1") gerichtet ist und der Auswerteeinheit (A) zweite Bildaufnahmen ($I_2$) zur Verfügung stellt,

    wobei die Auswerteeinheit (A) dafür ausgebildet ist, anhand der geschätzten Trajektorie (J) eines Fahrzeugs (2) eine erste Bildaufnahme ($I_1$) des Fahrzeugs (2) in Frontansicht einer zweiten Bildaufnahme ($I_2$) desselben Fahrzeugs (2) in Heckansicht zuzuordnen.

11. Vorrichtung nach Anspruch 9, umfassend

    zumindest eine Kamera (9, 10), die auf einen der Vorrichtung (3) vor- oder nachgelagerten Fahrbahnabschnitt (1', 1") gerichtet ist und der Auswerteeinheit (A) Bildaufnahmen ($I_1$, $I_2$) zur Verfügung stellt, und

    einen Funk-Sendeempfänger, der zum Auslesen von Kenndaten aus einem von einem passierenden Fahrzeug (2) mitgeführten Fahrzeuggerät auf die Fahrbahn (1) gerichtet ist und der Auswerteeinheit (A) die ausgelesenen Kenndaten zur Verfügung stellt,

    wobei die Auswerteeinheit (A) dafür ausgebildet ist, anhand der geschätzten Trajektorie (J) eines Fahrzeugs (2) eine Bildaufnahme ($I_1$, $I_2$) des Fahrzeugs (2) den ausgelesenen Kenndaten des Fahrzeuggeräts desselben Fahrzeugs (2) zuzuordnen.

12. Verfahren zur Detektion einer Radachse (4) eines auf einer Fahrbahn (1) fahrenden Fahrzeugs (2) mithilfe einer Mehrzahl von Radarsensoren ($R_n$), welche an einer Tragstruktur (5) quer über die Fahrbahn (1) verteilt angeordnete Radar-Sendeempfänger ($T_n$) haben und jeweils mittels eines etwa senkrecht nach unten gerichteten Radar-Messstrahls ($B_n$) ihres Radar-Sendeempfängers ($T_n$) zu aufeinanderfolgenden Zeitpunkten jeweils einen Doppler-Geschwindigkeitsmesswert ($v_n$) für ein den Radar-Messstrahl ($B_n$) reflektierendes Objekt (1, 2, 6) erzeugen, umfassend:

    Detektieren einer Radachse (4), wenn zwei Radarsensoren ($R_n$, $R_{n-x}$) innerhalb eines Toleranzzeitfensters (W) im Wesentlichen gleich große Maxima ($v_{n,p}$, $v_{n-x,p}$), oder stattdessen im Wesentlichen gleich große Minima, ihrer Geschwindigkeitsmesswerte ($v_n$, $v_{n-x}$) erzeugen.

13. Verfahren nach Anspruch 12, **dadurch gekennzeichnet, dass** die Radachse (4) nur dann detektiert wird, wenn zugleich alle zwischen den genannten beiden Radarsensoren ($R_n$, $R_{n-x}$) angeordneten Radarsensoren ($R_{n-1}$, ..., $R_{n-x+1}$) schwellwertunterschreitende Geschwindigkeitsmesswerte ($v_{n-1}$, ..., $v_{n-x+1}$) erzeugen.

14. Verfahren nach Anspruch 12 oder 13, durchgeführt mithilfe einer Mehrzahl von Laufzeitsensoren ($R_n$), welche an der Tragstruktur (5) quer über die Fahrbahn (1) verteilt angeordnete Laufzeit-Sendeempfänger ($T_n$) haben und jeweils mittels eines etwa senkrecht nach unten gerichteten Laufzeit-Messstrahls ($B_n$) ihres Laufzeit-Sendeempfängers ($T_n$) zu aufeinanderfolgenden Zeitpunkten jeweils ein Laufzeit-Entfernungsmesswert ($h_n$) für ein den Laufzeit-Messstrahl ($B_n$) reflektierendes Objekt (1, 2, 6) erzeugen, wobei die Radachse (4) nur dann detektiert wird, wenn zugleich alle zwischen den beiden genannten Radarsensoren ($R_n$, $R_{n-x}$) angeordneten Laufzeitsensoren ($R_{n-1}$, ..., $R_{n-x+1}$) einen geringeren als ihrer Höhe (e) über der leeren Fahrbahn (1) entsprechenden Entfernungsmesswert ($h_{n-1}$, ..., $h_{n-x+1}$) erzeugen.

15. Verfahren nach einem der Ansprüche 12 bis 14, durchgeführt mithilfe einer Mehrzahl von jeweils einem Radarsensor zugeordneten Laufzeitsensoren ($R_n$), welche an der Tragstruktur (5) quer über die Fahrbahn (1) verteilt angeordnete Laufzeit-Sendeempfänger ($T_n$) haben und jeweils mittels eines etwa senkrecht nach unten gerichteten Laufzeit-Messstrahls ($B_n$) ihres Laufzeit-Sendeempfängers ($T_n$) zu aufeinanderfolgenden Zeitpunkten jeweils ein Laufzeit-Entfernungsmesswert ($h_n$) für ein den Laufzeit-Messstrahl ($B_n$) reflektierendes Objekt (1, 2, 6) erzeugen, wobei die Radachse (4) nur dann detektiert wird, wenn zugleich die den beiden genannten Radarsensoren ($R_n$, $R_{n-x}$) zugeordneten Laufzeitsensoren ($R_n$, $R_{n-x}$) einen ihrer Höhe (e) über der leeren Fahrbahn (1) entsprechenden Entfernungsmesswert ($h_n$, $h_{n-x}$) erzeugen.

**16.** Verfahren nach einem der Ansprüche 12 bis 15, **dadurch gekennzeichnet, dass** aus dem gegenseitigen Abstand (a) der genannten beiden Radarsensoren ($R_n$, $R_{n-x}$) die Breite (b) des Fahrzeugs (2) ermittelt wird, und dass aus einer aus den Maxima ($v_{n,p}$, $v_{n-x,p}$) oder Minima ermittelten Geschwindigkeit ($v_F$) des Fahrzeugs (2), aus dem Zeitabstand ($\Delta t$) der beiden Maxima ($v_{n,p}$, $v_{n-x,p}$) oder Minima im genannten Toleranzzeitfenster (W) und aus der ermittelten Breite (b) des Fahrzeugs (2) dessen Ausrichtung ($\beta$) auf der Fahrbahn (1) ermittelt wird.

**17.** Verfahren nach einem der Ansprüche 12 bis 16, **dadurch gekennzeichnet, dass** aus der Position der beiden genannten Radarsensoren ($R_n$, $R_{n-x}$) an der Tragstruktur (5) die Position des Fahrzeugs (2) in Querrichtung der Fahrbahn (1) ermittelt wird.

**18.** Verfahren nach Anspruch 17 in Verbindung mit Anspruch 16, **dadurch gekennzeichnet, dass** aus der ermittelten Ausrichtung, der ermittelten Position und der ermittelten Geschwindigkeit ($v_F$) des Fahrzeugs (2) eine Trajektorie (J) des Fahrzeugs (2) auf der Fahrbahn (1) geschätzt wird, und dass mithilfe einer ersten Kamera (9), die auf einen der Vorrichtung (3) vorgelagerten ersten Fahrbahnabschnitt (1') gerichtet ist und erste Bildaufnahmen ($I_1$) macht, und einer zweiten Kamera (10), die auf einen der Vorrichtung (3) nachgelagerten zweiten Fahrbahnabschnitt (1") gerichtet ist und zweite Bildaufnahmen ($I_2$) macht, anhand der geschätzten Trajektorie (J) eine erste Bildaufnahme ($I_1$) des Fahrzeugs (2) in Frontansicht einer zweiten Bildaufnahme ($I_2$) desselben Fahrzeugs (2) in Heckansicht zugeordnet wird.

## Claims

**1.** A device for detecting an axle (4) of a vehicle (2) travelling on a road (1), comprising:

a plurality of radar sensors ($R_n$), which have radar transceivers ($T_n$) distributed on a supporting structure (5) transversely above the road (1) and which each, by means of an approximately vertically downwardly directed radar measuring beam ($B_n$) of the radar transceiver ($T_n$) thereof, at successive moments in time generate a Doppler speed measurement value ($v_n$) for an object (1, 2, 6) reflecting the radar measuring beam ($B_n$), and an evaluation unit (A), which is connected to measurement value outputs of the radar sensors ($R_n$) and which is configured to detect an axle (4) when two radar sensors ($R_n$, $R_{n-x}$) generate, within a tolerance time window (W), maxima ($v_{n,p}$, $v_{n-x,p}$) of substantially identical size, or instead minima of substantially identical size, of the speed measurement values ($v_n$, $v_{n-x}$) thereof.

**2.** The device according to Claim 1, **characterised in that** the evaluation unit (A) is configured to only detect an axle (4) when all radar sensors ($R_{n-1}$, ..., $R_{n-x+1}$) arranged between the aforementioned two radar sensors ($R_n$, $R_{n-x}$) generate at the same time speed measurement values ($v_{n-1}$, ..., $V_{n-x+1}$) which fall below a threshold value.

**3.** The device according to Claim 1 or 2, further comprising:

a plurality of propagation time sensors ($R_n$), which have propagation time transceivers ($T_n$) distributed on the supporting structure (5) transversely above the road (1) and which each, by means of an approximately vertically downwardly directed propagation time measuring beam ($B_n$) of the propagation time transceiver ($T_n$) thereof, at successive moments in time generate a propagation time distance measurement value ($h_n$) for an object (1, 2, 6) reflecting the propagation time measuring beam ($B_n$),
wherein the evaluation unit (A) is also connected to measurement value outputs of the propagation time sensors ($R_n$) and is configured to only detect an axle (4) when all propagation time sensors ($R_{n-1}$, ..., $R_{n-x+1}$) arranged between the two aforementioned radar sensors ($R_n$, $R_{n-x}$) generate at the same time a distance measurement value ($h_{n-1}$, ..., $h_{n-x+1}$) corresponding to less than the height (e) of said propagation time sensors above the empty road (1).

**4.** The device according to one of Claims 1 to 3, comprising:

a plurality of propagation time sensors, which are each assigned to a radar sensor ($R_n$) and which have propagation time transceivers ($T_n$) distributed on the supporting structure (5) transversely above the road (1) and which each, by means of an approximately vertically downwardly directed propagation time measuring beam ($B_n$) of the propagation time transceiver ($T_n$) thereof, at successive moments in time generate a propagation time distance measurement value ($h_n$) for an object (1, 2, 6) reflecting the propagation time measuring beam ($B_n$), wherein the evaluation unit (A) is connected to measurement value outputs of the propagation time sensors ($R_n$) and is configured to only detect an axle (4) when the propagation time sensors ($R_n$, $R_{n-x}$) assigned to the two aforementioned radar sensors ($R_n$, $R_{n-x}$) at the same time generate a distance measurement value ($h_n$, $h_{n-x}$) corresponding to the height (e) of said propagation time sensors above the empty road (1).

5. The device according to Claim 3 or 4, **characterised in that** the propagation time sensors ($R_n$) are formed by the radar sensors ($R_n$).

6. The device according to one of Claims 1 to 5, **characterised in that** the evaluation unit (A) is configured to establish the width (b) of the vehicle (2) from the mutual distance (a) between the aforementioned two radar sensors ($R_n$, $R_{n-x}$).

7. The device according to Claim 6, **characterised in that** the evaluation unit (A) is designed to establish the orientation ($\beta$) of a vehicle (2) on the road (1) from a speed ($v_F$) of said vehicle (2) established from the maxima ($v_{n,p}$, $v_{n-x,p}$) or minima, from the time distance ($\Delta t$) between the two maxima ($v_{n,p}$, $v_{n-x,p}$) or minima in the aforementioned tolerance time window (W), and from the established width (b) of said vehicle (2).

8. The device according to one of Claims 1 to 7, **characterised in that** the evaluation unit (A) is configured to establish the position of the vehicle (2) in the transverse direction of the road (1) from the position of the two aforementioned radar sensors ($R_n$, $R_{n-x}$) on the supporting structure (5).

9. The device according to Claim 8 in conjunction with Claim 7, **characterised in that** the evaluation unit (A) is configured to estimate a trajectory (J) of the vehicle (2) on the road (1) from the established orientation ($\beta$), the established position and the established speed ($v_F$) of the vehicle (2).

10. The device according to Claim 9, further comprising
a first camera (9), which is directed onto a first road portion (1') upstream of the device (3) and provides first recorded images ($I_1$) to the evaluation unit (A), and
a second camera (10), which is directed onto a second road portion (1") downstream of the device (3) and provides second recorded images ($I_2$) to the evaluation unit (A),
wherein the evaluation unit (A) is designed to assign a first recorded image ($I_1$) of a vehicle (2) taken from the front to a second recorded image ($I_2$) of the same vehicle (2) taken from the rear on the basis of the estimated trajectory (J) of said vehicle (2).

11. The device according to Claim 9, comprising
at least one camera (9, 10), which is directed onto a road portion (1', 1") upstream or downstream of the device (3) and provides recorded images ($I_1$, $I_2$) to the evaluation unit (A), and
a radio transceiver, which, in order to read out identifying data from a vehicle device carried by a passing vehicle (2), is directed onto the road (1) and provides the read-out identifying data to the evaluation unit (A),
wherein the evaluation unit (A) is configured to assign a recorded image ($I_1$, $I_2$) of a vehicle (2) to the read-out identifying data of the vehicle device of the same vehicle (2) on the basis of the estimated trajectory (J) of said vehicle (2).

12. A method for detecting an axle (4) of a vehicle (2) travelling on a road (1) with the aid of a plurality of radar sensors ($R_n$), which have radar transceivers ($T_n$) distributed on a supporting structure (5) transversely above the road (1) and which, by means of an approximately vertically downwardly directed radar measuring beam ($B_n$) of the radar transceiver ($T_n$) thereof, at successive moments in time generate a Doppler speed measurement value ($v_n$) for an object (1, 2, 6) reflecting the radar measuring beam ($B_n$), said method comprising the following steps:

detecting an axle (4) when two radar sensors ($R_n$, $R_{n-x}$), within a tolerance time window (W), generate maxima ($v_{n,p}$, $v_{n-x,p}$) of substantially identical size, or instead minima of substantially identical size, of the speed measurement values ($v_n$, $v_{n-x}$) thereof.

13. The method according to Claim 12, **characterised in that** the axle (4) is only detected when, at the same time, all radar sensors ($R_{n-1}$, ..., $R_{n-x+1}$) arranged between the aforementioned two radar sensors ($R_n$, $R_{n-x}$) generate speed measurement values ($v_{n-1}$, ..., $v_{n-x+1}$) falling below a threshold value.

**14.** The method according to Claim 12 or 13, carried out with the aid of plurality of propagation time sensors ($R_n$), which have propagation time transceivers ($T_n$) distributed on the supporting structure (5) transversely above the road (1) and which each, by means of an approximately vertically downwardly directed propagation time measuring beam ($B_n$) of the propagation time transceivers ($T_n$) thereof, at successive moments in time generate a propagation time distance measurement value ($h_n$) for an object (1, 2, 6) reflecting the propagation time measuring beam ($B_n$), wherein the axle (4) is only detected when all propagation time sensors ($R_{n-1}$, ..., $R_{n-x+1}$) arranged between the two afore-mentioned radar sensors ($R_n$, $R_{n-x}$) at the same time generate a distance measurement value ($h_{n-1}$, ..., $h_{n-x+1}$) corresponding to less than the height (e) of said propagation time sensors above the empty road (1).

**15.** The method according to one of Claims 12 to 14, carried out with the aid of a plurality of propagation time sensors ($R_n$), which are each assigned to a respective radar sensor and which have propagation time transceivers ($T_n$) distributed on the supporting structure (5) transversely the above the road (1) and which each, by means of an approximately vertically downwardly directed propagation time measuring beam ($B_n$) of the propagation time trans-ceiver ($T_n$) thereof, at successive moments in time generate a propagation time distance measurement value ($h_n$) for an object (1, 2, 6) reflecting the propagation time measuring beam ($B_n$), wherein the axle (4) is only detected when the propagation time sensors ($R_n$, $R_{n-x}$) assigned to the two aforementioned radar sensors ($R_n$, $R_{n-x}$) at the same time generate a distance measurement value ($h_n$, $h_{n-x}$) corresponding to the height (e) of said propagation time sensors above the empty road (1).

**16.** The method according to one of Claims 12 to 15, **characterised in that** the width (b) of the vehicle (2) is established from the mutual distance (a) between the aforementioned two radar sensors ($R_n$, $R_{n-x}$), and **in that** the orientation ($\beta$) of the vehicle on the road (1) is established from a speed ($v_F$) of said vehicle (2) established from the maxima ($v_{n,p}$, $v_{n-x,p}$) or minima, from the time distance ($\Delta t$) of the two maxima ($v_{n,p}$, $v_{n-x,p}$) or minima in the aforementioned tolerance time window (W), and from the established width (b) of the vehicle (2).

**17.** The method according to one of Claims 12 to 16, **characterised in that** the position of the vehicle (2) in the transverse direction of the road (1) is established from the position of the two aforementioned radar sensors ($R_n$, $R_{n-x}$) on the supporting structure (5).

**18.** The method according to Claim 17 in conjunction with Claim 16, **characterised in that** a trajectory (J) of the vehicle (2) on the road (1) is estimated from the established orientation, the established position and the established speed ($v_F$) of the vehicle (2), and **in that**, with the aid of a first camera (9), which is directed onto a first road portion (1') upstream of the device (3) and records first images ($I_1$), and a second camera (10), which is directed onto a second road portion (1") downstream of the device (3) and records second images ($I_2$), a first recorded image ($I_1$) of the vehicle (2) taken from the front is assigned to a second recorded image ($I_2$) of the same vehicle (2) taken from the rear on the basis of the estimated trajectory (J).

**Revendications**

**1.** Dispositif de détection d'un axe de roue (4) d'un véhicule (2) circulant sur une voie de circulation (1), comprenant :

une multiplicité de capteurs radar ($R_n$), lesquels ont des émetteurs-récepteurs radar ($T_n$) disposés sur une structure de support (5) distribués perpendiculairement au dessus de la voie de circulation (1) et génèrent, respectivement au moyen d'un faisceau de mesure radar ($B_n$) à peu près vertical, orienté vers le bas, de son émetteur-récepteur radar ($T_n$), respectivement une valeur de mesure de vitesse Doppler ($v_n$) pour un objet (1, 2, 6) réfléchissant le faisceau de mesure radar ($B_n$) à des moments successifs, et
une unité d'exploitation (A) associée à des sorties de valeurs de mesure des capteurs radar ($R_n$), laquelle est conçue pour détecter un axe de roue (4) lorsque deux capteurs radar ($R_n$, $R_{n-x}$) génèrent, dans une fenêtre de temps de tolérance (W), des maximas ($v_{n,p}$, $v_{n-x,p}$) de taille sensiblement égale, ou au lieu de cela, des minimas de taille sensiblement égale, de leurs valeurs de mesure de vitesse ($v_n$, $v_{n-x}$).

**2.** Dispositif selon la revendication 1, **caractérisé en ce que** l'unité d'exploitation (A) est conçue pour ne détecter un axe de roue (4) que si tous les capteurs radars ($R_{n-1}$, ..., $R_{n-x+1}$) disposés entre lesdits deux capteurs radar ($R_n$, $R_{n-x}$) génèrent simultanément des valeurs de mesure de vitesse ($v_{n-1}$, ..., $v_{n-x+1}$) en dessous d'une valeur de seuil.

**3.** Dispositif selon la revendication 1 ou 2, comprenant en outre :

une multiplicité de capteurs de temps de transit ($R_n$), lesquels ont des émetteurs-récepteurs ($T_n$) disposés sur la structure de support (5) distribués perpendiculairement au dessus de la voie de circulation (1) et génèrent, respectivement au moyen d'un faisceau de mesure de temps de transit ($B_n$) à peu près vertical, orienté vers le bas, de son émetteur-récepteur de temps de transit ($T_n$), respectivement une valeur de mesure d'éloignement de temps de transit ($h_n$) pour un objet (1, 2, 6) réfléchissant le faisceau de mesure de temps de transit ($B_n$) à des instants successifs,

où l'unité d'exploitation (A) est en outre associée à des sorties de valeurs de mesure des capteurs de temps de transit ($R_n$) et est conçue pour ne détecter un axe de roue (4) que si, simultanément, tous les capteurs de temps de transit ($R_{n-1}$, ..., $R_{n-x+1}$) disposés entre lesdits deux capteurs radar ($R_n$, Rn-x) génèrent une valeur de mesure d'éloignement ($h_{n-1}$, ..., $h_{n-x+1}$) inférieure à sa hauteur (e) au dessus de la voie de circulation (1) vide.

4. Dispositif selon l'une des revendications 1 à 3, comprenant :

une multiplicité de capteurs de temps de transit chacun associé à un capteur radar ($R_n$), lesquels ont des émetteurs-récepteurs de temps de transit ($T_n$) disposés sur la structure de support (5) distribués perpendiculairement au dessus de la voie de circulation (1) et génèrent, respectivement au moyen d'un faisceau de mesure de temps de transit ($B_n$) à peu près vertical, orienté vers le bas, de son émetteur-récepteur radar ($T_n$), respectivement une valeur de mesure d'éloignement de temps de transit ($h_n$) pour un objet (1, 2, 6) réfléchissant le faisceau de mesure de temps de transit ($B_n$) à des instants successifs,

où l'unité d'exploitation (A) est associée à des sorties de valeurs de mesure des capteurs de temps de transit ($R_n$) et est conçue pour ne détecter un axe de roue (4) que si, simultanément, lesdits deux capteurs de temps de transit ($R_n$, $R_{n-x}$) associés auxdits deux capteurs radar ($R_n$, $R_{n-x}$) génèrent une valeur de mesure d'éloignement ($h_n$, $h_{n-x}$) correspondant à sa hauteur (e) au dessus de la voie de circulation (1) vide.

5. Dispositif selon la revendication 3 ou 4, **caractérisé en ce que** les capteurs de temps de transit ($R_n$) sont formés par les capteurs radar ($R_n$).

6. Dispositif selon l'une des revendications 1 à 5, **caractérisé en ce que** l'unité d'exploitation (A) est conçue pour déterminer la largeur (b) du véhicule (2) à partir de la distance (a) relative entre lesdits deux capteurs radar ($R_n$, $R_{n-x}$).

7. Dispositif selon la revendication 6, **caractérisé en ce que** l'unité d'exploitation (A) est conçue pour déterminer, à partir d'une vitesse ($v_F$) du véhicule (2) déterminée à partir des maxima ($v_{n,p}$, $v_{n-x,p}$) ou des minimas, à partir de l'intervalle de temps ($\Delta t$) desdits deux maximas ($v_{n,p}$, $v_{n-x,p}$) ou minimas dans ladite fenêtre de tolérance (W), et à partir de la largeur (b) du véhicule (2) déterminée, l'orientation ($\beta$) du véhicule (2) sur la voie de circulation (1).

8. Dispositif selon l'une des revendications 1 à 7, **caractérisé en ce que** l'unité d'exploitation (A) est conçue pour déterminer la position du véhicule (2) dans une direction en sens transverse de la voie de circulation (1) à partir de la position desdits deux capteurs radar ($R_n$, $R_{n-x}$) sur la structure de support (5).

9. Dispositif selon la revendication 8 en combinaison avec la revendication 7, **caractérisé en ce que** l'unité d'exploitation (A) est conçue pour estimer une trajectoire (J) du véhicule (2) sur la voie de circulation (1) à partir de l'orientation ($\beta$) déterminée, de la position déterminée et de la vitesse ($v_F$) déterminée du véhicule (2).

10. Dispositif selon la revendication 9, comprenant en outre
une première caméra (9), qui est orientée sur une première portion (1') de la voie de circulation située avant le dispositif (3) et met à disposition de l'unité d'exploitation (A) des premiers enregistrements de l'image ($I_1$), et
une deuxième caméra (10), qui est orientée sur une deuxième portion (1") de la voie de circulation située après le dispositif (3) et met à disposition de l'unité d'exploitation (A) des deuxièmes enregistrements de l'image ($I_2$),
où l'unité d'exploitation (A) est conçue pour, à l'aide de la trajectoire (J) estimée d'un véhicule (2), attribuer un premier enregistrement de l'image ($I_1$) du véhicule dans une vue par l'avant à un deuxième enregistrement de l'image ($I_2$) du même véhicule (2) dans une vue par l'arrière.

11. Dispositif selon la revendication 9, comprenant
au moins une caméra (9, 10) qui est orientée sur une portion (1', 1") de voie de circulation située avant ou après le dispositif (3) et met à la disposition de l'unité d'exploitation (A) des enregistrements de l'image ($I_1$, $I_2$), et
un émetteur-récepteur radio, qui est orienté sur la voie de circulation (1) pour la lecture de données d'identification à partir d'un appareil de véhicule embarqué par un véhicule (2) de passage et met à disposition de l'unité d'exploitation (A) les données d'identification lues,

où l'unité d'exploitation (A) est conçue pour, à l'aide de la trajectoire (J) estimée d'un véhicule (2), attribuer un enregistrement de l'image (I$_1$, I$_2$) du véhicule (2) aux données d'identification lues de l'appareil du véhicule du même véhicule (2).

**12.** Procédé de détection d'un axe de roue (4) d'un véhicule (2) circulant sur une voie de circulation (1) à l'aide d'une multiplicité de capteurs radar (R$_n$), lesquels ont des émetteurs-récepteurs radar (T$_n$) disposés sur une structure de support (5) distribués perpendiculairement au dessus de la voie de circulation (1) et génèrent, respectivement au moyen d'un faisceau de mesure radar (B$_n$) à peu près vertical, orienté vers le bas, de son émetteur-récepteur radar (T$_n$), respectivement une valeur de mesure de vitesse Doppler (v$_n$) pour un objet (1, 2, 6) réfléchissant le faisceau de mesure radar (B$_n$) à des moments successifs, comprenant :

la détection d'un axe de roue (4) lorsque deux capteurs radar (R$_n$, R$_{n-x}$) génèrent dans une fenêtre de tolérance (W) des maximas de taille sensiblement égale, ou au lieu de cela, des minimas de taille sensiblement égale, de leurs valeurs de mesure de vitesse (v$_n$, v$_{n-x}$).

**13.** Procédé selon la revendication 12, **caractérisé en ce que** l'axe de roue (4) n'est détecté que si, simultanément, tous les capteurs radars (R$_{n-1}$, ..., R$_{n-x+1}$) disposés entre lesdits deux capteurs radar (R$_n$, R$_{n-x}$) génèrent des valeurs de mesure de vitesse (v$_{n-1}$, ..., v$_{n-x+1}$) en dessous d'une valeur de seuil.

**14.** Procédé selon la revendication 12 ou 13, exécuté à l'aide d'une multiplicité de capteurs de temps de transit (R$_n$) lesquels ont des émetteurs-récepteurs (T$_n$) disposés sur la structure de support (5) distribués perpendiculairement au dessus de la voie de circulation (1) et génèrent, respectivement au moyen d'un faisceau de mesure de temps de transit (B$_n$) à peu près vertical, orienté vers le bas, de son émetteur-récepteur temps de transit (T$_n$), respectivement une valeur de mesure d'éloignement de temps de transit (h$_n$) pour un objet (1, 2, 6) réfléchissant le faisceau de mesure de temps de transit (B$_n$) à des instants successifs, où l'axe de roue (4) n'est détecté que si, simultanément, tous les capteurs de temps de transit (R$_{n-1}$, ..., R$_{n-x+1}$) disposés entre lesdits deux capteurs radar (R$_n$, R$_{n-x}$) génèrent une valeur de mesure d'éloignement (h$_{n-1}$, ..., h$_{n-x+1}$) inférieure à sa hauteur (e) au dessus de la voie de circulation (1) vide.

**15.** Procédé selon l'une des revendications 12 à 14, exécuté à l'aide d'une multiplicité de capteurs de temps de transit (R$_n$) chacun associé à un capteur radar, lesquels ont des émetteurs-récepteurs de temps de transit (T$_n$) disposés sur la structure de support (5) distribués perpendiculairement au dessus de la voie de circulation (1) et génèrent, respectivement au moyen d'un faisceau de mesure de temps de transit (B$_n$) à peu près vertical, orienté vers le bas, de son émetteur-récepteur de temps de transit (T$_n$), respectivement une valeur de mesure d'éloignement de temps de transit (h$_n$) pour un objet (1, 2, 6) réfléchissant le faisceau de mesure de temps de transit (B$_n$) à des instants successifs, où l'axe de roue (4) n'est détecté que si, simultanément, lesdits deux capteurs de temps de transit (R$_n$, R$_{n-x}$) associés auxdits deux capteurs radar (R$_n$, R$_{n-x}$) génèrent une valeur de mesure d'éloignement (h$_n$, h$_{n-x}$) correspondant à sa hauteur (e) au dessus de la voie de circulation (1) vide.

**16.** Procédé selon l'une des revendications 12 à 15, **caractérisé en ce qu'**à partir de la distance (a) relative entre lesdits deux capteurs radar (R$_n$, R$_{n-x}$), la largeur (b) du véhicule (2) est déterminée, et qu'à partir d'une vitesse (v$_F$) du véhicule (2) déterminée à partir des maximas (v$_{n,p}$, v$_{n-x,p}$) ou minimas, à partir de l'intervalle de temps ($\Delta t$) entre les deux maximas (v$_{n,p}$, v$_{n-x,p}$) ou minimas dans ladite fenêtre de tolérance (W), et à partir de la largeur (b) déterminée du véhicule (2), l'orientation ($\beta$) du véhicule (2) sur la voie de circulation (1) est déterminé.

**17.** Procédé selon l'une des revendications 12 à 16, **caractérisé en ce qu'**à partir de la position desdits deux capteurs radar (R$_n$, R$_{n-x}$) sur la structure de support (5), la position du véhicule (2) est déterminée dans le sens transverse de la voie de circulation (1).

**18.** Procédé selon la revendication 17 en combinaison avec la revendication 16, **caractérisé en ce qu'**à partir du sens de circulation déterminé, de la position déterminée et de la vitesse (v$_F$) déterminée du véhicule (2), une trajectoire (J) du véhicule (2) sur la voie de circulation (1) est estimée, et qu'avec l'aide d'une première caméra (9), qui est orientée sur une première portion (1') de voie de circulation située avant le dispositif (3) et qui fait des premiers enregistrements de l'image (I$_1$), et une seconde caméra (10), qui est orientée sur une seconde portion (1") de voie de circulation située après le dispositif (3) et qui fait des seconds enregistrements de l'image (I$_2$), à l'aide de la trajectoire (J) estimée un premier enregistrement de l'image (I$_1$) du véhicule (2) dans une vue par l'avant est attribué à un second enregistrement de l'image (I$_2$) du même véhicule (2) dans une vue par l'arrière.

*Fig. 1*

*Fig. 2*

*Fig. 3*

***Fig. 4***

*Fig. 5*

**EP 2 910 968 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020140924 A1
- EP 2538239 B1
- WO 2012175470 A1